# EUROPÄISCHE PATENTSCHRIFT

(11) **EP 3 117 125 B1**
(45) Veröffentlichungstag und Bekanntmachung des Hinweises auf die Patenterteilung: **29.05.2019**
(21) Anmeldenummer: 15716008.6
(22) Anmeldetag: 08.04.2015
(51) Int. Cl.: F16H 57/038, F16H 57/02

(54) **KEGELRADGETRIEBE**
BEVEL GEAR FIRST STAGE OF A PLANETARY GEAR UNIT
ÉTAGE D'ENTRÉE D'UNE ROUE CONIQUE D'UN ENGRENAGE PLANÉTAIRE

(30) Priorität: 17.04.2014 EP 14165139
(43) Veröffentlichungstag der Anmeldung: 18.01.2017
(73) Patentinhaber: Siemens Aktiengesellschaft, 80333 München (DE)
(72) Erfinder: KIESENBAUER, Jens, 09322 Penig (DE); LIEBIG, Thomas, 01069 Dresden (DE); SCHADE, Robert, 04680 Colditz (DE)
(86) Internationale Anmeldenummer: PCT/EP2015/057578
(87) Internationale Veröffentlichungsnummer: WO 2015/158583

(56) Entgegenhaltungen:
- DE-A1-102007 061 017
- FR-A1- 2 613 448
- GB-A- 1 171 631
- JP-A- S5 743 052

## Beschreibung

Die vorliegende Erfindung betrifft ein Kegelradgetriebe.

Es ist bekannt, eine als Vorstufe eines Hauptgetriebes dienende Kegelradstufe mit einer fliegenden Lagerung der Antriebswelle auszuführen, wobei die Lager der Antriebswelle an dem angetriebenen Wellenende der Antriebswelle, d.h. motorseitig, angeordnet sind. In der Firmenschrift "Die Gestaltung von Wälzlagerungen - Konstruktionsbeispiele aus dem Maschinen-, Fahrzeug- und Gerätebau" der Schaeffler Technologies GmbH & Co. KG, Schweinfurt, Publ.-Nr. WL 00 200/5 DA, Ausgabe Juli 2011, ist unter der Nr. 29 auf Seite 45 eine Kegelradvorstufe eines Stirnradgetriebes dargestellt.

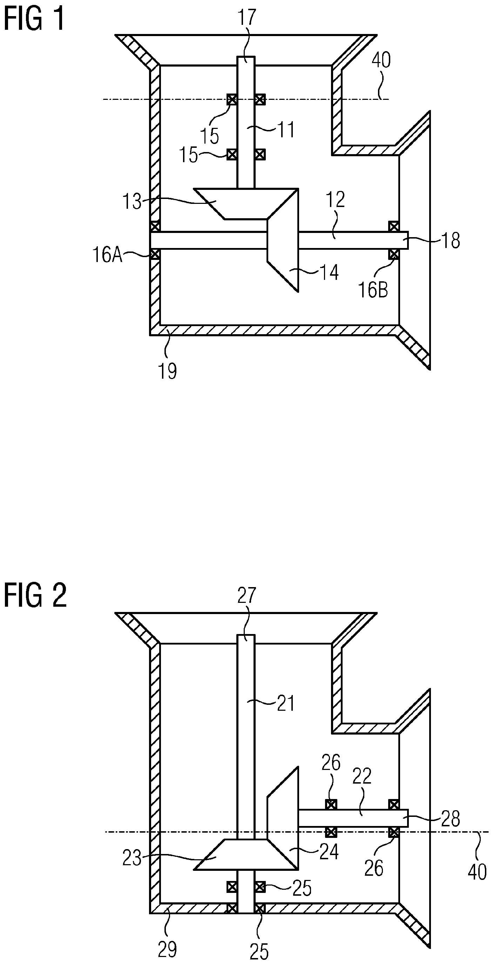

Eine schematische Darstellung einer solchen bekannten Kegelradstufe ist in Fig. 1 dargestellt. Der Bauraum, der von der Antriebswelle 11 und einem koaxial mit dem Wellenende 17 verbundenem Antriebsmotor (nicht dargestellt) eingenommen wird, ist relativ groß. Ist außerdem, wie in Fig. 1 dargestellt, die durch einen Motor angetriebene Antriebswelle 11 der Kegelradstufe aufrecht stehend angeordnet, z.B. um den horizontalen Bauraum des Antriebs, bestehend aus Motor und Getriebe, möglichst gering zu halten, muss zur Schmierung der Lager 15 der Antriebswelle 11 entweder auf eine Fettschmierung zurückgegriffen oder eine Ölschmierung durch eine folgender Maßnahme sichergestellt werden: entweder wird eine die Kosten erhöhende Druckölschmierung vorgesehen oder der Ölstand in der Kegelradstufe wird so weit erhöht, dass auch das oberste Lager 15 der Antriebswelle 11 sicher im Ölbad liegt. Bedingt durch den Aufbau der Kegelradstufe muss in letzterem Fall das komplette Getriebegehäuse 19 mit Öl gefüllt werden, was den Wirkungsgrad des Getriebes durch Planschverluste senkt.

DE 102007061017 A1 (Schaeffler KG) 25.06.2009, welche als nächstliegender Stand der Technik angesehen wird, beschreibt in Fig. 2 ein Winkelgetriebe 5 in einem Allrad-Antriebsstrang eines Kraftfahrzeugs. Dabei wird ein Ritzel 3 durch ein Kegelrad 13 angetrieben, welches drehfest auf einer Hohlwelle 12 sitzt. Diese Hohlwelle 12 ist mit einem Ausgang eines Vorderachs-Differentialgetriebes über eine Steckverzahnung 70 verbunden. Durch die Drehung des Ritzels 3 wird auch ein drehfest mit einer das Ritzel 3 einstückig tragenden Ritzelwelle 2 verbundener Flansch 4 angetrieben, der somit wiederum eine mit diesem verbindbare und zur Hinterachse führende Abtriebswelle, beispielsweise eine Kardanwelle, antreiben kann.

JP57043052 zeigt ein Kegelradgetriebe umfassend eine einseitig gelagerte Antriebswelle (2) mit einem Antriebskegelrad (6), eine Abtriebswelle (3) mit einem mit dem Antriebskegelrad (6) in Zahneingriff stehenden Abtriebskegelrad (7) und ein Getriebegehäuse (1), in welchem die beiden Wellen gelagert sind,- wobei die Antriebswelle (2) an einem Wellenende (untere Teil der Welle 2) eine Antriebsschnittstelle aufweist - wobei die Abtriebswelle (3) an ihrem von dem Abtriebs-Kegelrad (7) abgewandten Ende eine Abtriebsschnittstelle (linke Seite der Welle 3) aufweist, wobei die Abtriebswelle (3) fliegend gelagert ist.

Der Erfindung liegt die Aufgabe zugrunde, ein verbessertes Kegelradgetriebe anzugeben, welches als Vorstufe eines nachgeschalteten Hauptgetriebes dienen kann.

Diese Aufgabe wird gelöst durch die Merkmale des Anspruchs 1.

Das erfindungsgemäße Kegelradgetriebe kann als Vorstufe eines Industrie-Hauptgetriebes dienen. Das Kegelradgetriebe umfasst eine einseitig gelagerte Antriebswelle mit einem Antriebs-Kegelrad sowie eine fliegend gelagerte Abtriebswelle mit einem Abtriebs-Kegelrad, welches mit dem Antriebs-Kegelrad kämmt. Das Kegelradgetriebe umfasst außerdem ein Getriebegehäuse, in welchem die beiden Wellen gelagert sind. Die Antriebswelle weist an einem Wellenende eine Antriebsschnittstelle zur Verbindung mit einem Antriebsmotor auf. Die Antriebswelle ist auf der von der Antriebsschnittstelle abgewandten Seite des Antriebs-Kegelrads in einem Lager gelagert. Die Abtriebswelle weist an ihrem von dem Abtriebs-Kegelrad abgewandten Ende eine Abtriebsschnittstelle zur Verbindung mit einem Hauptgetriebe auf.

Der Begriff "Kegelrad" umfasst sowohl ein Kegelrad als auch ein Tellerrad. So ist es z.B. möglich, dass die Antriebswelle ein Kegelrad und die Abtriebswelle ein Tellerrad trägt, oder umgekehrt.

Einer Getriebeeinheit, z.B. einem ein- oder mehrstufigen Planeten- oder Stirnradgetriebe, kann eine Getriebe-Vorstufe vorgeschaltet sein. Bezeichnet man die aus der Vorstufe und der Getriebeeinheit gebildete Transmissionsvorrichtung als "Getriebe", so kann man die Getriebeeinheit - in Relation zu der vorgeschalteten Getriebe-Vorstufe - als "Haupt"-Getriebe bezeichnen. Bei der vorliegenden Erfindung ist die Getriebe-Vorstufe in Form eines Kegelradgetriebes ausgebildet. Das Hauptgetriebe kann jedes beliebige Getriebe sein, z.B. ein ein- oder mehrstufiges Planeten- oder Stirnradgetriebe.

Ähnlich wie bei der eingangs erwähnten bekannten Kegelradvorstufe eines Stirnradgetriebes erfolgt auch bei der vorliegenden Erfindung die Lagerung der Antriebswelle des als Getriebe-Vorstufe dienenden Kegelradgetriebes fliegend; im Gegensatz zum Stand der Technik ist aber die Lagerung der Antriebswelle des Kegelradgetriebes auf die andere Seite des Zahneingriffs verlegt. Durch die Verlegung der Lagerung der Antriebswelle auf die von der Antriebsschnittstelle abgewandte Seite des Antriebs-Kegelrads kann der Motor wesentlich näher an das Getriebe herangerückt werden; dadurch wird der motorseitig axial benötigte Bauraum gegenüber herkömmlichen Getriebe-Kegelradvorstufen wesentlich verringert.

Zusätzlich zu dem Vorteil des verringerten Bauraums ist das Kegelradgetriebe sowohl antriebs- als auch abtriebsseitig jeweils mit einer Schnittstellenlösung versehen. Diese erlaubt am Antrieb die Adaption verschiedener Motoren mit nur einer Antriebswelle sowie am Abtrieb die Nutzung verschiedener Übersetzungen der nachfolgenden Getriebestufe mit ebenfalls nur einer Abtriebswelle. Diese beiden Schnittstellen senken die Teilevielfalt bei der Nutzung der Kegelradstufe innerhalb eines Getriebebaukastens erheblich, und damit auch die Kosten der Antriebslösung.

Das erfindungsgemäße Kegelradgetriebe ist vorzugsweise ein Industriegetriebe, d.h. entsprechend den Industrieanforderungen ausgelegt.

Vorteilhafte Ausgestaltungen der Erfindung sind Gegenstand der Unteransprüche.

Gemäß einer bevorzugten Ausgestaltung umfasst das Lager der Antriebswelle zwei Wälzlager, d.h. die Antriebswelle ist zweifach gelagert. Somit ist die Antriebswelle stabil gelagert. Es ist möglich, dass die Antriebswelle in einer Lagerbuchse mit zwei Lagern gelagert ist.

Das Lager der Antriebswelle kann als ein Doppelkegelrollenlager in X-Anordnung ausgebildet sein. Dadurch wird der Vorteil erreicht, dass durch den Druckwinkel des Kegelrollenlagers die Lage der virtuellen Lagerstelle auf der Welle näher an den Zahneingriff heranrückt. Dies verringert die Wellendeformation, was die Geräuschentwicklung reduziert und die Sicherheit der Kegelradverzahnung steigert.

Gemäß einer bevorzugten Ausgestaltung ist die Kegelspitze der Verzahnung des Antriebs-Kegelrads in Richtung zu der Antriebsschnittstelle gewandt. Dadurch wird erreicht, dass die durch den Zahneingriff des Antriebs-Kegelrads in das Abtriebs-Kegelrad entstehende und auf die Antriebswelle wirkende Axialkraft in Richtung zu dem Lager der Antriebswelle gerichtet ist. Somit kann diese Axialkraft in der in Bezug auf das Antriebs-Kegelrad gegenüber der Antriebsschnittstelle angeordneten Lagerung der Antriebswelle aufgefangen werden.

Gemäß einer bevorzugten Ausgestaltung ist die Antriebswelle im Betrieb vertikal angeordnet und die Abtriebswelle im Betrieb waagrecht angeordnet. Besonders vorteilhaft ist es in diesem Fall, wenn die Antriebsschnittstelle vertikal nach oben gerichtet ist, d.h. vertikal über dem Antriebs-Kegelrad liegt. Dadurch liegt das Lager der Antriebswelle bei aufrecht stehendem Motor vertikal unter dem Antriebs-Kegelrad und somit im Ölbad, die Schmierung ist also bereits für den normalen Ölstand des Gesamtgetriebes sichergestellt. Dies senkt die Verluste des Getriebes und erhöht so die Wirtschaftlichkeit des Antriebs. Nur bei einer Anordnung des Motors nach unten würde das Problem der Schmiermittelversorgung der Antriebswellenlagerung wiederum entstehen; diese Bauform ist jedoch für den praktischen Einsatz nahezu irrelevant.

Gemäß einer bevorzugten Ausgestaltung ist das Getriebegehäuse bei vertikal angeordneter Antriebswelle im Betrieb des Kegelradgetriebes bis zu Lagern der waagrecht angeordneten Abtriebswelle mit flüssigem Schmierstoff, insbesondere Schmieröl, gefüllt. Durch den im Vergleich mit bisher bekannten Kegelradvorstufen stark verringerten Ölstand in der Kegelradvorstufe werden die Planschverluste reduziert und der Getriebewirkungsgrad erhöht.

Gemäß einer bevorzugten Ausgestaltung ist die Antriebswelle im Betrieb vertikal ausgerichtet, die Antriebsschnittstelle vertikal nach oben gerichtet und die Verzahnung des Antriebs-Kegelrads vertikal nach oben gewandt. In diesem Fall werden sowohl die Lager der Antriebswelle und der Abtriebswelle als auch der Zahneingriff des Antriebs-Kegelrads in das Abtriebs-Kegelrad geschmiert, wenn das Ölniveau in der Kegelradvorstufe so hoch gewählt wird, dass die Lager der waagrecht verlaufenden Abtriebswelle in das Ölbad eintauchen.

Gemäß einer bevorzugten Ausgestaltung trägt die Antriebswelle auf der von dem Antriebs-Kegelrad abgewandte Seite des Lagers mindestens ein Anbauteil, insbesondere eines oder mehrere folgender Anbauteile: eine Pumpe, eine Rücklaufsperre, einen Lüfter, eine Bremse, einen Geber zur Positionsbestimmung der Antriebswelle. Dadurch wird das freie Wellenende, das die Antriebswelle des erfindungsgemäßen Kegelradgetriebes besitzt, zur Montage von Anbauteilen, d.h. zusätzlicher Bauelemente, genutzt; dabei kann die durch die Antriebswelle bereitgestellte Rotationsenergie zum Antrieb dieser Anbauteile genutzt werden. Da es sich um die Eingangswelle des Getriebes handelt, an welcher die höchsten Drehzahlen und das geringste Drehmoment anliegen, können die Anbauteile entsprechend kleiner dimensioniert werden, als dies an Zwischenwellen möglich wäre.

Gemäß einer bevorzugten Ausgestaltung ist das Anbauteil außerhalb des Getriebegehäuses angeordnet. Dadurch können auch Anbauteile mit relativ großem Bauraum montiert werden bzw. Anbauteile, die mit der Umgebung in Kontakt kommen müssen, wie z.B. Lüfter.

Eine vorteilhafte Ausgestaltung der Erfindung wird durch ein Getriebe gebildet, welches ein erfindungsgemäßes Kegelradgetriebe als Vorstufe und ein dem Kegelradgetriebe nachgeschaltetes Hauptgetriebe umfasst, wobei das Hauptgetriebe über die Abtriebsschnittstelle des Kegelradgetriebes mit dem Kegelradgetriebe gekoppelt ist. Dabei kann die Abtriebsschnittstelle so ausgebildet sein, dass der die Abtriebswelle umgebende Teil des Getriebegehäuses stirnseitig einen Montageflansch zur Montage des Hauptgetriebes aufweist. Vorzugsweise ist das Hauptgetriebe dem Kegelradgetriebe unmittelbar nachgeschaltet, d.h. die Abtriebswelle des Kegelradgetriebe ist ohne eine dazwischen geschaltete Getriebestufe mit einer Eingangswelle des Hauptgetriebe verbunden.

Gemäß einer bevorzugten Ausgestaltung des Getriebes ist das Hauptgetriebe als ein ein- oder mehrstufiges Planetengetriebe ausgebildet.

Es ist vorteilhaft, einen Getriebemotor, umfassend einen Motor und ein Getriebe, mit einem Getriebe, wie oben beschrieben, auszustatten, wobei der Motor über die Antriebsschnittstelle mit dem Kegelradgetriebe gekoppelt ist. Dabei kann die Antriebsschnittstelle so ausgebildet sein, dass der die Antriebswelle umgebende Teil des Getriebegehäuses stirnseitig einen Montageflansch zur Montage des Motors aufweist.

Gemäß einer bevorzugten Ausgestaltung des Getriebemotors ist eine Rotorwelle des Motors durch ein Kupplungsstück mit dem vertikal oberen Ende der Antriebswelle des Kegelradgetriebes verbunden.

Es ist vorteilhaft, zum Betreiben des Kegelradgetriebes wie oben beschrieben, d.h. mit einer im Betrieb vertikal angeordneten Antriebswelle, das Getriebegehäuse bei betriebenem Kegelradgetriebe bis zu Lagern der waagrechten Abtriebswelle mit Schmierstoff, insbesondere Schmieröl, zu füllen. Durch den im Vergleich mit bisher bekannten Kegelradvorstufen stark verringerten Ölstand in dem Kegelradgetriebe werden die Planschverluste reduziert und der Getriebewirkungsgrad erhöht.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- Fig. 1: schematisch in einem Schnitt ein bekanntes Kegelradgetriebe als Kegelradvorstufe eines Hauptgetriebes,
- Fig. 2: schematisch in einem Schnitt eine bevorzugte Ausgestaltung eines Kegelradgetriebes als Kegelradvorstufe eines Hauptgetriebes,
- Fig. 3: schematisch in einem Schnitt ein Kegelradgetriebe mit einem angebauten Lüfter,
- Fig. 4: schematisch ein Planetengetriebe mit einem als Vorstufe dienenden Kegelradgetriebe,
- Fig. 5: schematisch einen Getriebemotor, und
- Fig. 6: einen Schnitt durch eine Antriebsschnittstelle.

Fig. 1 zeigt eine Kegelradvorstufe eines Getriebes, wie sie aus dem Stand der Technik bekannt ist. Die Kegelradvorstufe weist eine fliegend gelagerte Antriebswelle 11 mit einem Antriebs-Kegelrad 13, eine Abtriebswelle 12 mit einem mit dem Antriebs-Kegelrad 13 in Zahneingriff stehenden Abtriebs-Kegelrad 14 und ein Getriebegehäuse 19 auf, in welchem die beiden Wellen 11, 12 gelagert sind. Dabei ist die Kegelradvorstufe während ihres Betriebs so angeordnet, dass die Antriebswelle 11 vertikal und die Abtriebswelle 12 horizontal angeordnet ist.

Die Antriebswelle 11 wird an ihrem vertikal oberen Ende 17 mit einem Antriebsmotor verbunden. Darunter sind die Lager 15 der Antriebswelle 11 angeordnet, und vertikal unterhalb der Lager 15 ist das Antriebs-Kegelrad 13 auf der Antriebswelle 11 angeordnet. Dabei weist die Kegelspitze der Verzahnung des Antriebs-Kegelrads 13 vertikal nach unten. Die Abtriebswelle 12 ist an beiden Enden in Lagern 16A, 16B gelagert, d. h. beiderseits des Abtriebs-Kegelrads 14. An ihrem einen Ende 18 wird die Abtriebswelle 12 mit einer Getriebehauptstufe verbunden.

Um eine ausreichende Schmierung aller Schmierstellen der Kegelradvorstufe zu gewährleisten, d.h. auch der am motorseitigen Ende der Antriebswelle 11 angeordneten Lager 15 der der Antriebswelle, muss das Schmierölniveau 40 im Getriebegehäuse 19 bis zum vertikal obersten Lager 15 reichen.

Fig. 2 zeigt ein erfindungsgemäßes Kegelradgetriebe, das als Kegelradvorstufe eines Hauptgetriebes dient. Die Kegelradvorstufe weist eine fliegend gelagerte Antriebswelle 21 mit einem Antriebs-Kegelrad 23, eine Abtriebswelle 22 mit einem mit dem Antriebs-Kegelrad 23 in Zahneingriff stehenden Abtriebs-Kegelrad 24 und ein Getriebegehäuse 29 auf, in welchem die beiden Wellen 21, 22 gelagert sind. Dabei ist das Kegelradgetriebe während seines Betriebs so angeordnet, dass die Antriebswelle 21 vertikal und die Abtriebswelle 22 horizontal angeordnet ist.

Die Antriebswelle 21 weist an ihrem vertikal oberen Ende 27 eine Antriebsschnittstelle 27 auf, über die sie mit einem Antriebsmotor verbunden werden kann. Dabei weist der Antriebsmotor eine vertikale Rotorwellenlage auf. Darunter ist das Antriebs-Kegelrad 23 auf der Antriebswelle 21 angeordnet. Unterhalb des Antriebs-Kegelrads 23 sind die Lager 25 der Antriebswelle 21 angeordnet. Dabei weist die Kegelspitze der Verzahnung des Antriebs-Kegelrads 23 vertikal nach oben. An ihrem von dem Abtriebs-Kegelrad 24 abgewandten Ende weist die Abtriebswelle 22 eine Abtriebsschnittstelle 28 zur Verbindung mit einem Hauptgetriebe, z.B. einem Planetengetriebe, auf. Die Abtriebswelle 22 ist in zwischen dem Abtriebs-Kegelrad 24 und der Abtriebsschnittstelle 28 angeordneten Lagern 26 fliegend gelagert. Die öldichte Abdichtung der Lagerstelle 25 am vertikal unteren Ende der Antriebswelle kann mithilfe von Dichtungen erfolgen, wie sie dem Fachmann ausreichend bekannt sind, z.B. mithilfe eines Staurohrs.

Um eine ausreichende Schmierung aller Schmierstellen des Kegelradgetriebes zu gewährleisten, ist es bei dem erfindungsgemäßen Kegelradgetriebe ausreichend, wenn das Schmierölniveau 40 im Getriebegehäuse 29 bis an den vertikal unteren Rand der Lager 26 der waagrecht liegenden Abtriebswelle 22 reicht. Dieses gegenüber der in Fig. 1 dargestellten Situation niedrigere Ölniveau 40 ist möglich durch die erfindungsgemäße Verlegung der Lager 25 der Antriebswelle 21 an eine Position vertikal unterhalb des Antriebs-Kegelrads 23.

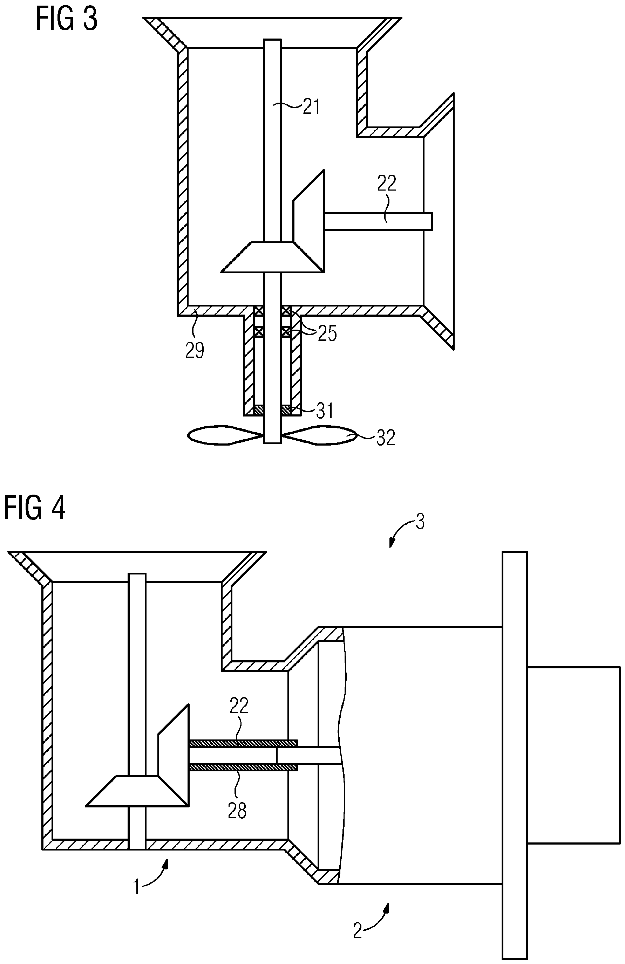

Fig. 3 zeigt eine bevorzugte Weiterbildung eines erfindungsgemäßen Kegelradgetriebes als Vorstufe eines Hauptgetriebes. Dabei ist an dem der Antriebsschnittstelle gegenüberliegenden Ende der Antriebswelle 21 diese über die Lager 25 hinaus soweit vertikal nach unten verlängert, dass genügend Montageraum geschaffen wird, um innerhalb des Getriebegehäuses 29 eine Rücklaufsperre 31 sowie außerhalb des Getriebegehäuses 29 ein Lüfterrad 32 auf der Antriebswelle 21 anzuordnen.

Fig. 4 zeigt ein Planetengetriebe 3, umfassend ein Planeten-Hauptgetriebe 2 und ein Kegelradgetriebe 1 als Kegelradvorstufe. Dabei ist das Planeten-Hauptgetriebe 2 über die Abtriebsschnittstelle 28 mit dem Kegelradgetriebe 1 gekuppelt. Das Planeten-Hauptgetriebe 2 kann eine oder mehrere koaxial gelagerte Planetenstufen aufweisen, die in einem eigenen, vorzugsweise zylindrischen Gehäuse gelagert sind.

Es ist möglich, dass die Kupplung als eine Zahnkupplung ausgebildet ist. Die Abtriebswelle 22 des Kegelradgetriebes ist als eine Hohlwelle ausgebildet, an deren planetenseitigen Ende eine Innenverzahnung angebracht ist. Das Planeten-Hauptgetriebe 2 weist eine Eingangswelle mit einer korrespondierenden Außenverzahnung auf.

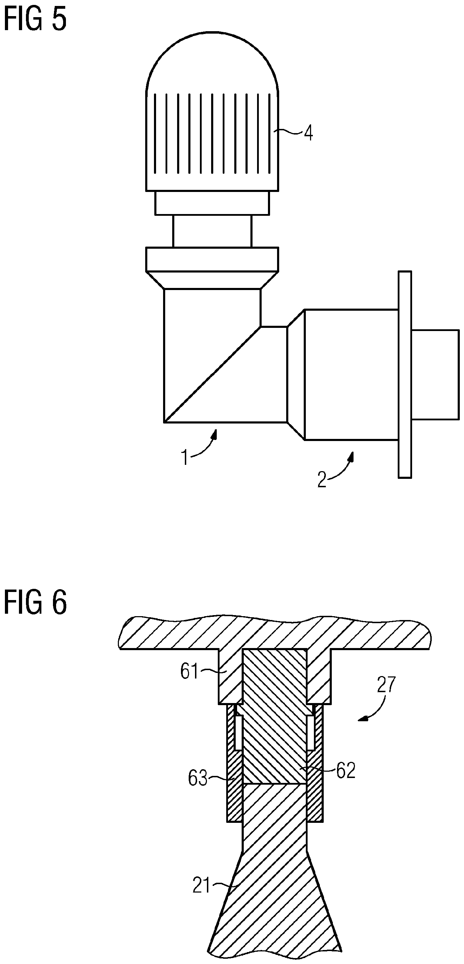

Fig. 5 zeigt einen Getriebemotor, umfassend einen Motor 4, eine Kegelradvorstufe 1 und ein Planeten-Hauptgetriebe 2. Dabei ist der Motor 4 über eine Antriebsschnittstelle mit der Kegelradvorstufe 1 gekoppelt. Die Antriebsschnittstelle stellt, wie in Fig. 6 dargestellt, eine drehfeste Verbindung zwischen einer Rotorwelle 61 des Motors 4 und der Antriebswelle 21 der Kegelradvorstufe 1 her. Dabei ist die Antriebswelle 21 als eine außenverzahnte Vollwelle und die Rotorwelle 61 als eine innenverzahnte Hohlwelle ausgebildet. An die Antriebswelle 21 wird stirnseitig ein außenverzahnter Bolzen 62 angesetzt und durch ein übergeschobenes innenverzahntes hülsenförmiges Kupplungsstück 63 drehfest mit der Antriebswelle 21 verbunden. Der Bolzen 62 wiederum greift mit seiner Außenverzahnung in die Innenverzahnung der Motorhohlwelle 61. Durch verschieden dimensionierte Bolzen 62 ist es einfach möglich, drehfeste Verbindungen zwischen der Kegelradvorstufe und Motoren verschiedenen Typs herzustellen.

Alternativ kann auch ein marktüblicher Wellenzapfen mit einer Passfedernut eingesetzt werden, wie bei IEC-Motoren üblich. In diesem Fall muss lediglich eine andere Form für das Kupplungsstück 63 vorgesehen werden. Diese weist dann motorseitig eine Passfederverbindung auf, und abtriebsseitig wiederum eine Innenverzahnung.

## Patentansprüche

1. Kegelradgetriebe (1), umfassend eine einseitig gelagerte Antriebswelle (21) mit einem Antriebs-Kegelrad (23), eine Abtriebswelle (22) mit einem mit dem Antriebs-Kegelrad (23) unmittelbar in Zahneingriff stehenden Abtriebs-Kegelrad (24) und ein Getriebegehäuse (29), in welchem die beiden Wellen (21, 22) gelagert sind,
- wobei die Antriebswelle (21) an einem Wellenende eine Antriebsschnittstelle (27) aufweist und auf der von der Antriebsschnittstelle (27) abgewandten Seite des Antriebs-Kegelrads (23) in einem Lager (25) gelagert ist, und
- wobei die Abtriebswelle (22) an ihrem von dem Abtriebs-Kegelrad (24) abgewandten Ende eine Abtriebsschnittstelle (28) aufweist,
**dadurch gekennzeichnet,**
**dass** die Abtriebswelle (22) fliegend gelagert und die Antriebswelle (21) im Betrieb vertikal angeordnet ist.

2. Kegelradgetriebe nach Anspruch 1 oder 2, wobei die Kegelspitze der Verzahnung des Antriebs-Kegelrads (23) zu der Antriebsschnittstelle (27) gewandt ist.

3. Kegelradgetriebe nach einem vorhergehenden Anspruch, wobei die Antriebsschnittstelle (27) vertikal nach oben gerichtet ist, und die Abtriebswelle (22) im Betrieb waagrecht angeordnet ist.

4. Kegelradgetriebe nach Anspruch 3, wobei das Getriebegehäuse (29) im Betrieb des Kegelradgetriebes bis zu Lagern (26) der waagrecht angeordneten Abtriebswelle (22) mit flüssigem Schmierstoff (40) gefüllt ist.

5. Kegelradgetriebe nach einem vorhergehenden Ansprüche, wobei die Antriebswelle (21) auf der von dem Antriebs-Kegelrad (23) abgewandte Seite des Lagers (25) mindestens ein Anbauteil trägt.

6. Kegelradgetriebe nach Anspruch 5, wobei das mindestens eine Anbauteil eines oder mehrere folgender Anbauteile ist:
eine Pumpe, eine Rücklaufsperre (31), einen Lüfter (32), eine Bremse, einen Geber zur Positionsbestimmung der Antriebswelle (21) .

7. Kegelradgetriebe nach Anspruch 5 oder 6, wobei das mindestens eine Anbauteil außerhalb des Getriebegehäuses (29) angeordnet ist.

8. Getriebe (3), umfassend ein Kegelradgetriebe (1) nach einem der vorhergehenden Ansprüche und ein dem Kegelradgetriebe nachgeschaltetes Hauptgetriebe (2), wobei das Hauptgetriebe (2) über die Abtriebsschnittstelle (28) des Kegelradgetriebes (1) mit dem Kegelradgetriebe (1) gekoppelt ist.

9. Getriebe (3) nach Anspruch 8, wobei das Hauptgetriebe (2) ein Planetengetriebe ist.

10. Getriebemotor, umfassend einen Motor (4) und ein Getriebe (3) nach Anspruch 8 oder 9, wobei der Motor (4) über die Antriebsschnittstelle (27) mit dem Kegelradgetriebe (1) gekoppelt ist.

11. Getriebemotor nach Anspruch 10, wobei eine Rotorwelle (61) des Motors (4) durch ein Kupplungsstück (63) mit dem vertikal oberen Ende der Antriebswelle (21) des Kegelradgetriebes (1) verbunden ist.

12. Verfahren zum Betreiben des Kegelradgetriebes nach einem der Ansprüche 1 bis 7, wobei das Getriebegehäuse (29) bei betriebenem Kegelradgetriebe bis zu Lagern (26) der waagrecht orientierten Abtriebswelle (22) mit Schmierstoff (40) gefüllt wird.

## Claims

1. Bevel gear drive (1), comprising an input shaft (21) mounted on one side having an input bevel gear (23), an output shaft (22) with an output bevel gear (24) which is in direct meshing engagement with the input bevel gear (23) and a drive housing (29) in which the two shafts (21, 22) are mounted,
- wherein the input shaft (21) has an input interface (27) on one shaft end and is mounted in a bearing (25) on the side of the input bevel gear (23) facing away from the input interface (27), and
- wherein the output shaft (22) has, at the end thereof facing away from the output bevel gear (24), an output interface (28),
**characterised in that**
the output shaft (22) is mounted overhung and the input shaft (21) is arranged vertically in operation.

2. Bevel gear drive according to claim 1, wherein the cone point of the toothing of the input bevel gear (23) points toward the input interface (27).

3. Bevel gear drive according to a preceding claim, wherein the input interface (27) is directed vertically upwardly and the output shaft (22) is arranged horizontally in operation.

4. Bevel gear drive according to claim 3, wherein the drive housing (29) is filled in operation of the bevel gear drive as far as bearings (26) of the horizontally arranged output shaft (22) with liquid lubricant (40).

5. Bevel gear drive according to one of the preceding claims, wherein the input shaft (21) carries at least one add-on part on the side of the bearing (25) facing away from the input bevel gear (23).

6. Bevel gear drive according to claim 5, wherein the at least one add-on part is one or more of the following add-on parts:
a pump, a reverse motion block (31), a ventilator (32), a brake, a sensor for determining the position of the input shaft (21).

7. Bevel gear drive according to claim 5 or 6, wherein the at least one add-on part is arranged outside the drive housing (29) .

8. Drive (3), comprising a bevel gear drive (1) according to one of the preceding claims and a main drive (2) connected downstream of bevel gear drive, wherein the main drive (2) is coupled via the output interface (28) of the bevel gear drive (1) to the bevel gear drive (1).

9. Drive (3) according to claim 8, wherein the main drive (2) is a planetary drive.

10. Geared motor, comprising a motor (4) and a drive (3) according to claim 8 or 9, wherein the motor (4) is coupled via the input interface (27) to the bevel gear drive (1).

11. Geared motor according to claim 10, wherein a rotor shaft (61) of the motor (4) is connected via a coupling piece (63) to the vertically upper end of the input shaft (21) of the bevel gear drive (1).

12. Method for operating the bevel gear drive according to one of claims 1 to 7, wherein the drive housing (29) is filled in operation of the bevel gear drive as far as bearings (26) of the horizontally oriented output shaft (22) with lubricant (40) .

## Revendications

1. Engrenage (1) conique, comprenant un arbre (21) menant monté d'un côté et ayant une roue (23) conique menante, un arbre (22) mené ayant une roue (24) conique menée engrenant par dent directement avec la roue (23) conique menante et un carter (29) d'engrenage, dans lequel les deux arbres (21, 22) sont montés,
- dans lequel l'arbre (21) menant a, à un bout, une interface (27) menante et est monté dans un palier (25) du côté, loin de l'interface (27) menante, de la roue (23) conique menante, et
- dans lequel l'arbre (22) mené a une interface (28) menée à son bout, loin de la roue (24) conique menée,
**caractérisé**
**en ce que** l'arbre (22) mené est monté mobile et l'arbre (21) menant est disposé verticalement en fonctionnement.

2. Engrenage conique suivant la revendication 1, dans lequel le sommet conique de l'engrenage de la roue (23) conique menante est tourné vers l'interface (27) menante.

3. Engrenage conique suivant l'une des revendications précédentes, dans lequel l'interface (27) menante est dirigée verticalement vers le haut et l'arbre (22) mené est disposé horizontalement en fonctionnement.

4. Engrenage conique suivant la revendication 3, dans lequel le carter (29) de l'engrenage est, lorsque l'engrenage conique est en fonctionnement, empli d'un lubrifiant (40) liquide, jusqu'au palier (26) de l'arbre (22) mené disposé horizontalement.

5. Engrenage conique suivant l'une des revendications précédentes,
dans lequel l'arbre (21) menant porte au moins une partie portée du côté, loin de la roue (23) conique menante, du palier (25).

6. Engrenage conique suivant la revendication 5, dans lequel la au moins une partie portée est une ou plusieurs des parties portées suivantes :
une pompe, un blocage (31) de retenue, un ventilateur (32), un frein, un indicateur de détermination de la position de l'arbre (21) menant.

7. Engrenage conique suivant la revendication 5 ou 6, dans lequel la au moins une partie portée est disposée à l'extérieur du carter (29) de l'engrenage.

8. Engrenage (3), comprenant un engrenage (1) conique suivant l'une des revendications précédentes et un engrenage (2) principal monté en aval de l'engrenage conique, dans lequel l'engrenage (2) principal est accouplé à l'engrenage (1) conique par l'interface (28) menée de l'engrenage (1) conique.

9. Engrenage (3) suivant la revendication 8, dans lequel l'engrenage (2) principal est un engrenage épicycloïdal.

10. Motoréducteur, comprenant un moteur (4) et un engrenage (3) suivant la revendication 8 ou 9, le moteur (4) étant accouplé à l'engrenage (1) conique par l'interface (27) menant.

11. Motoréducteur suivant la revendication 10, dans lequel un arbre (61) rotorique du moteur (4) est relié par une pièce (63) d'accouplement au bout supérieur verticalement de l'arbre (23) menant de l'engrenage (1) conique.

12. Procédé pour faire fonctionner l'engrenage conique suivant l'une des revendications 1 à 7, dans lequel on remplit de lubrifiant (40) le carter (29) de l'engrenage, jusqu'au palier (26) de l'arbre (22) mené orienté horizontalement, alors que l'engrenage conique est en fonctionnement.
